(19) Europäisches Patentamt / European Patent Office / Office européen des brevets

(11) **EP 4 480 603 A1**

(12) **EUROPEAN PATENT APPLICATION**
published in accordance with Art. 153(4) EPC

(43) Date of publication:
**25.12.2024 Bulletin 2024/52**

(21) Application number: **22933469.3**

(22) Date of filing: **25.03.2022**

(51) International Patent Classification (IPC):
**B22F 1/00** (2022.01)   **B22F 1/052** (2022.01)
**B22F 10/20** (2021.01)   **B33Y 70/00** (2020.01)

(52) Cooperative Patent Classification (CPC):
**B22F 1/00; B22F 1/052; B22F 10/20; B33Y 70/00**

(86) International application number:
**PCT/JP2022/014272**

(87) International publication number:
**WO 2023/181329 (28.09.2023 Gazette 2023/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: Fukuda Metal Foil & Powder Co., Ltd.
Kyoto 600-8435 (JP)

(72) Inventors:
• MATSUMOTO, Seiichi
  Kyoto-shi, Kyoto 607-8305 (JP)
• SUGITANI, Yuji
  Kyoto-shi, Kyoto 607-8305 (JP)
• IMAI, Ken
  Kyoto-shi, Kyoto 607-8305 (JP)
• ISHIDA, Yu
  Kyoto-shi, Kyoto 607-8305 (JP)
• KUSHIHASHI, Makoto
  Kyoto-shi, Kyoto 607-8305 (JP)

(74) Representative: Betten & Resch
Patent- und Rechtsanwälte PartGmbB
Maximiliansplatz 14
80333 München (DE)

(54) **COPPER ALLOY POWDER FOR ADDITIVE LAYER MANUFACTURING, PRODUCTION METHOD AND EVALUATION METHOD THEREFOR, METHOD FOR PRODUCING ADDITIVE LAYER-MANUFACTURED COPPER ALLOY ARTICLE, AND ADDITIVE LAYER-MANUFACTURED COPPER ALLOY ARTICLE**

(57) This invention provides a copper alloy power for additive manufacturing that obtains a copper alloy additively manufactured product having a high strength and a high electrical conductivity. This invention provides a copper alloy powder for additive manufacturing used to manufacture an additively manufactured product by an additive manufacturing method, wherein the copper alloy powder contains not less than 0.70 wt% to not more than 1.5 wt% of chromium and not less than 0.05 wt% to not more than 0.35 wt% of magnesium, and a balance is formed from copper and an unavoidable impurity. This invention also provides an evaluation method of a copper alloy powder for additive manufacturing, including additively manufacturing a copper alloy additively manufactured product using the copper alloy powder for additive manufacturing of an evaluation target, measuring an electrical conductivity X (%IACS) and a Vickers hardness Y (Hv) of the copper alloy additively manufactured product, and evaluating the copper alloy powder for additive manufacturing depending on whether, if the electrical conductivity X (%IACS) and the Vickers hardness Y (Hv) are plotted on a two-dimensional graph formed by an X-axis and a Y-axis, a point (X, Y) is located on a high strength side and a high electrical conductivity side of a boundary line represented by (Y = -1.1X + 300).

FIG. 1

EP 4 480 603 A1

**Description**

TECHNICAL FIELD

The present invention relates to a copper alloy powder for additive manufacturing, a manufacturing method and evaluation method thereof, a manufacturing method of a copper alloy additively manufactured product, and a copper alloy additively manufactured product.

BACKGROUND ART

In the above technical field, patent literature 1 discloses a copper alloy powder for additive manufacturing, which is manufactured by an atomization method and contains chromium more than 1.00 mass% to 2.80 mass% or less and copper as a balance.

CITATION LIST

PATENT LITERATURE

Patent literature 1: Japanese Patent No. 6389557

SUMMARY OF THE INVENTION

TECHNICAL PROBLEM

However, in general, the strength (hardness) and the electrical conductivity of a copper alloy have a tradeoff relationship, and the technique described in the above literature cannot obtain a copper alloy additively manufactured product having a high strength and a high electrical conductivity.
The present invention enables to provide a technique of solving the above-described problem.

SOLUTION TO PROBLEM

One example aspect of the invention provides a copper alloy powder for additive manufacturing used to manufacture an additively manufactured product by an additive manufacturing method, wherein
the copper alloy powder contains not less than 0.70 wt% to not more than 1.5 wt% of chromium and not less than 0.05 wt% to not more than 0.35 wt% of magnesium, and a balance is formed from copper and an unavoidable impurity.
Another example aspect of the present invention provides a copper alloy additively manufactured product additively manufactured by an additive manufacturing apparatus using the above-described copper alloy powder for additive manufacturing, wherein
the copper alloy additively manufactured product contains not less than 0.70 wt% to not more than 1.5 wt% of chromium and not less than 0.05 wt% to not more than 0.35 wt% of magnesium, and a balance is formed from copper and an unavoidable impurity.
Still other example aspect of the present invention provides a manufacturing method of a copper alloy additively manufactured product, comprising:

additively manufacturing a copper alloy additively manufactured product by an additive manufacturing apparatus using the above-described copper alloy powder for additive manufacturing; and
holding the copper alloy additively manufactured product at not less than 400°C to not more than 500°C.

Still other example aspect of the present invention provides a manufacturing method of a copper alloy powder for additive manufacturing, which is a manufacturing method of a copper alloy powder for additive manufacturing used to manufacture an additively manufactured product by an additive manufacturing method, comprising:

generating, by one of a gas atomization method and a plasma rotating electrode method, a copper alloy powder containing not less than 0.70 wt% to not more than 1.5 wt% of chromium, not less than 0.05 wt% to not more than 0.35 wt% of magnesium, and a balance formed from copper and an unavoidable impurity; and
classifying the generated copper alloy powder into a particle size of not less than 10 $\mu$m to not more than 45 $\mu$m and a particle size of not less than 45 $\mu$m to not more than 105 $\mu$m.

Still other example aspect of the present invention provides an evaluation method of a copper alloy powder for additive manufacturing, comprising:

additively manufacturing a copper alloy additively manufactured product using the copper alloy powder for additive manufacturing of an evaluation target;

measuring an electrical conductivity X (%IACS) and a Vickers hardness Y (Hv) of the copper alloy additively manufactured product; and

evaluating the copper alloy powder for additive manufacturing depending on whether, if the electrical conductivity X (% IACS) and the Vickers hardness Y (Hv) are plotted on a two-dimensional graph formed by an X-axis and a Y-axis, a point (X, Y) is located on a high strength side and a high electrical conductivity side of a boundary line represented by (Y = -1.1X + 300).

ADVANTAGEOUS EFFECTS OF INVENTION

According to the present invention, it is possible to obtain a copper alloy additively manufactured product having a high strength and a high electrical conductivity.

BRIEF DESCRIPTION OF DRAWINGS

Fig. 1 is a graph showing the relationship and the boundary line between the Vickers hardness and the electrical conductivity of an additively manufactured product in patent literature 1;

Fig. 2 is a flowchart showing the procedure of an evaluation method of a copper alloy powder for additive manufacturing according to the example embodiment;

Fig. 3 shows a phase diagram of a binary alloy of copper and magnesium and a phase diagram of a binary alloy of chromium and magnesium in the copper alloy powder for additive manufacturing used in this example embodiment; and

Fig. 4 is a graph showing the relationship and the boundary line between the Vickers hardness and the electrical conductivity of each of copper alloy additively manufactured products obtained in examples and comparative examples.

DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

[First Example Embodiment]

In this example embodiment, a new evaluation method of a copper alloy powder for additive manufacturing will be described. Before that, the current situation of copper alloy powders for additive manufacturing will be described.

<Current Situation of Copper Alloy Powders for Additive Manufacturing>

An additive manufacturing technique enables to produce a product that has a complex shape and is difficult to manufacture by a conventional processing technique, and this technique is expected to be applied in various fields. In particular, application of metal materials excellent in a mechanical characteristic is demanded.

In the metal materials, copper has a high electrical conductivity or thermal conductivity, and application of the additive manufacturing method to a product having a complex shape such as a heat sink or a heat exchanger is expected. However, major materials that have conventionally been applied as metal powders for additive manufacturing are iron, nickel, aluminum, titanium, and alloys thereof, and there are still few application examples of copper and copper alloys. The reason for this is as follows. Since copper has a high electrical conductivity and a high thermal conductivity, heat energy that is applied as a laser beam at the time of additive manufacturing is quickly radiated and diffused, and therefore, copper cannot sufficiently be molten so it is difficult to obtain a high-density additively manufactured product.

On the other hand, patent literature 1 discloses a copper alloy powder for additive manufacturing, which is manufactured by an atomization method and contains chromium more than 1.00 mass% to 2.80 mass% or less and copper as a balance. In manufacturing, since the copper alloy powder is rapidly solidified from a molten state, chromium is in a super-saturated solid solution state. Since the thermal diffusibility/heat dissipation lowers, and the thermal conductivity lowers, the copper alloy powder can easily be molten and manufactured using a low-output manufacturing apparatus. At the time of additive manufacturing, a manufacturing region is temporarily molten and then rapidly solidified, and therefore, chromium is in the super-saturated solid solution state. Hence, when the additively manufactured product undergoes aging treatment, chromium is precipitated from copper that is the substrate, and the purity of the copper substrate rises accordingly, and the electrical conductivity improves. At the same time, the strength can be improved by precipitation strengthening.

According to an example of patent literature 1, in aging treatment at 450°C or more to 500°C or less at which the strength is maximized, a copper alloy additively manufactured product having an electrical conductivity of 47.64%IACS or more to 73.96%IACS or less and a Vickers hardness of 213.3 Hv or more to 259.8 Hv or less can be obtained.

<Evaluation Method of Copper Alloy Powder for Additive Manufacturing>

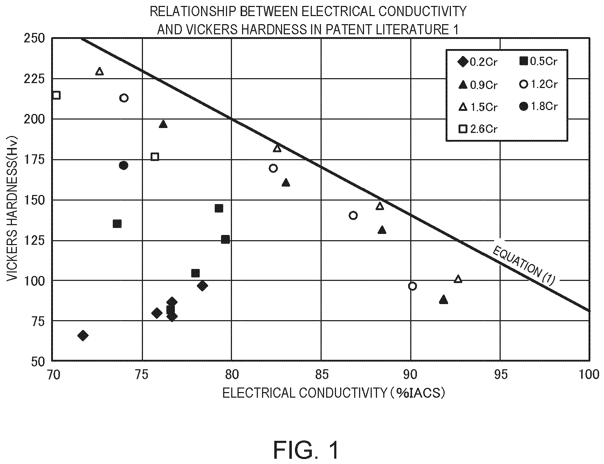

However, in general, the strength or hardness and the electrical conductivity of a copper alloy have a tradeoff relationship. For example, in the case of the additively manufactured product described in patent literature 1, the relationship between the Vickers hardness and the electrical conductivity in aging treatment at 500°C or more to 700°C or less can be organized as shown in Fig. 1. Fig. 1 is a graph showing the relationship and the boundary line between the Vickers hardness and the electrical conductivity of the additively manufactured product in patent literature 1.

As shown in Fig. 1, the relationship between a Vickers hardness Y (Hv) and an electrical conductivity X (%IACS) is limited in a region on the lower side of the boundary line represented by equation (1) below, that is, in a region on a low strength side and a low electrical conductivity side. Including the case of patent literature 1, in general, when the aging treatment temperature is raised, or the aging treatment time is prolonged, the electrical conductivity can be improved. However, since this causes overaging, precipitated chromium particles become coarse, and the strength largely lowers. That is, this indicates that, under aging treatment conditions that maximize the strength, chromium cannot completely be precipitated from the copper substrate, and chromium more than the solid-solubility limit remains in the substrate.

$$Y = -6X + 680 \qquad\qquad (1)$$

A practical copper alloy for additive manufacturing is required not only to implement a high density and develop an excellent electrical conductivity intrinsic to copper but also to simultaneously achieve the electrical conductivity and the mechanical strength at high level. However, as described above, since the electrical conductivity and the strength have a tradeoff relationship, it is not easy to achieve both characteristics. For example, in patent literature 1, a copper alloy for additive manufacturing in a region on the upper side of the boundary line represented by equation (1) above, that is, in a region on a high strength side and a high electrical conductivity side cannot be obtained.

In this example embodiment, in an aging treatment range of 400°C or more to 500°C or less, aiming at simultaneously achieving the electrical conductivity and the mechanical strength at high level, equation (2) is used as a reference that specifically indicates a high strength and a high electrical conductivity. When the characteristics are plotted on a graph with an X-axis representing the electrical conductivity (%IACS) and a Y-axis representing the Vickers hardness (Hv), the balance between the strength and the electrical conductivity can be evaluated from a linear function on the X-Y graph. Since the strength and the electrical conductivity have a tradeoff relationship, and the Vickers hardness lowers as the electrical conductivity rises, these can be expressed as a linear function with a negative slope on the X-Y graph.

$$Y = -1.1X + 300 \qquad\qquad (2)$$

In a metal, the electrical conductivity and the thermal conductivity almost hold a proportional relationship, and this is known as the Wiedemann-Franz law. Hence, a copper alloy additively manufactured product additively manufactured by an additive manufacturing apparatus using a copper alloy powder for additive manufacturing according to the present invention has an excellent electrical conductivity, and can therefore be used as a copper alloy additively manufactured product having a high thermal conductivity.

(Procedure of Evaluation Method of Copper Alloy Powder for Additive Manufacturing)

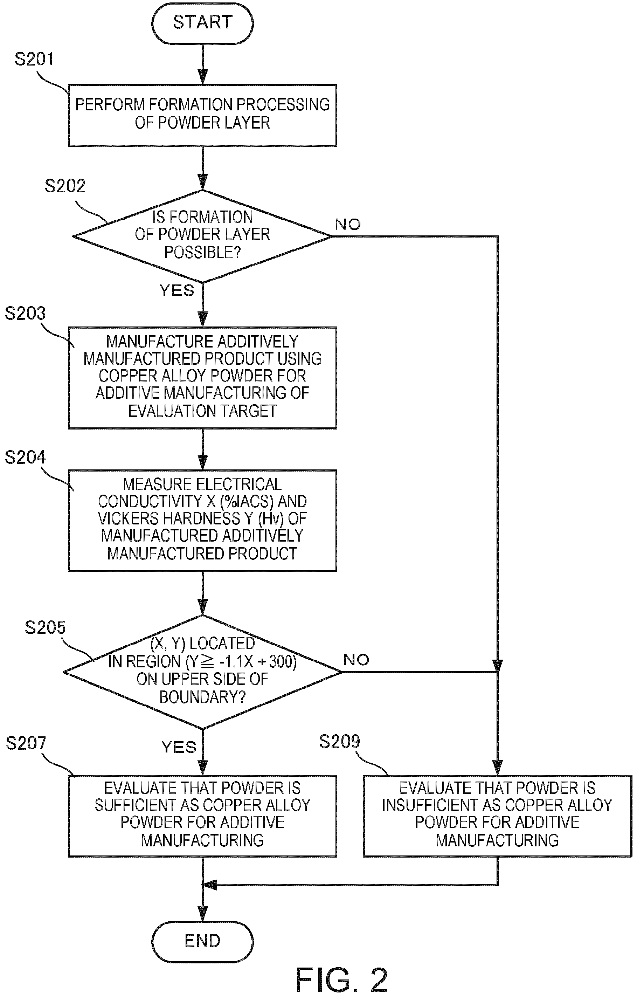

Fig. 2 is a flowchart showing the procedure of an evaluation method of the copper alloy powder for additive manufacturing according to this example embodiment.

In step S201 of Fig. 2, formation processing of a powder layer for additive manufacturing is performed using a copper alloy powder for additive manufacturing of an evaluation target. In step S202, it is determined whether a powder layer capable of additive manufacturing can be formed by the copper alloy powder for additive manufacturing of the evaluation target. If the squeegeeing property is poor, and the powder layer capable of additive manufacturing cannot be formed, it is evaluated in step S209 that the powder is insufficient as a copper alloy powder for additive manufacturing.

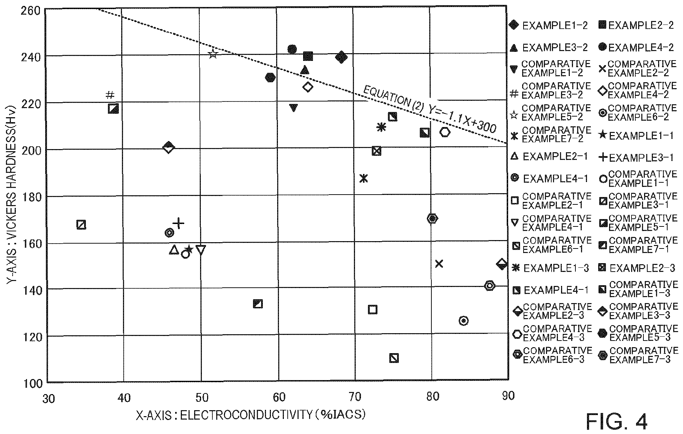

On the other hand, if the squeegeeing property is sufficient, and the powder layer capable of additive manufacturing can be formed, in step S203, an additively manufactured product is manufactured using an additive manufacturing apparatus or the like using the copper alloy powder for additive manufacturing of the evaluation target. In step S204, the electrical conductivity X (%IACS) and the Vickers hardness Y (Hv) of the manufactured additively manufactured product are measured. In step S205, it is determined whether a plot point (X, Y) on a two-dimensional graph (see Fig. 4) whose axes represent the measured electrical conductivity X (%IACS) and Vickers hardness Y (Hv) is located in the region (Y ≥ -1.1X + 300) on the upper side of the boundary line (Y = -1.1X + 300).

If the plot point is located in the upper region (Y ≥ -1.1X + 300), it is evaluated in step S207 that the powder is sufficient as a copper alloy powder for additive manufacturing. On the other hand, if the plot point is located in the lower region (Y < -1.1X + 300), it is evaluated in step S209 that the powder is insufficient as a copper alloy powder for additive manufacturing.

According to the evaluation method of the copper alloy powder for additive manufacturing of this example embodiment, it is possible to evaluate a copper alloy powder for additive manufacturing, which can obtain a copper alloy additively manufactured product having a high strength and a high electrical conductivity.

[Second Example Embodiment]

In this example embodiment, the characteristics of a copper alloy powder for additive manufacturing for which a sufficiently satisfactory result is obtained in the evaluation method of a copper alloy powder for additive manufacturing according to the first example embodiment will be described.

<Materials of High Evaluation>

In this example embodiment, there are provided a manufacturing method of a raw material powder capable of implementing a characteristic in the region on the upper side of the boundary line represented by equation (2), that is, in the region on the high strength side and the high electrical conductivity side, the raw material powder, and an additively manufactured product obtained using the raw material powder.

Aiming at the region on the upper side of the boundary line represented by equation (2), that is, the region on the high strength side and the high electrical conductivity side, and as a result, the present inventors found an alloy with a characteristic in the region on the upper side of the boundary line represented by equation (2), that is, in the region on the high strength side and the high electrical conductivity side by making a ternary alloy by adding magnesium to a copper-chromium alloy.

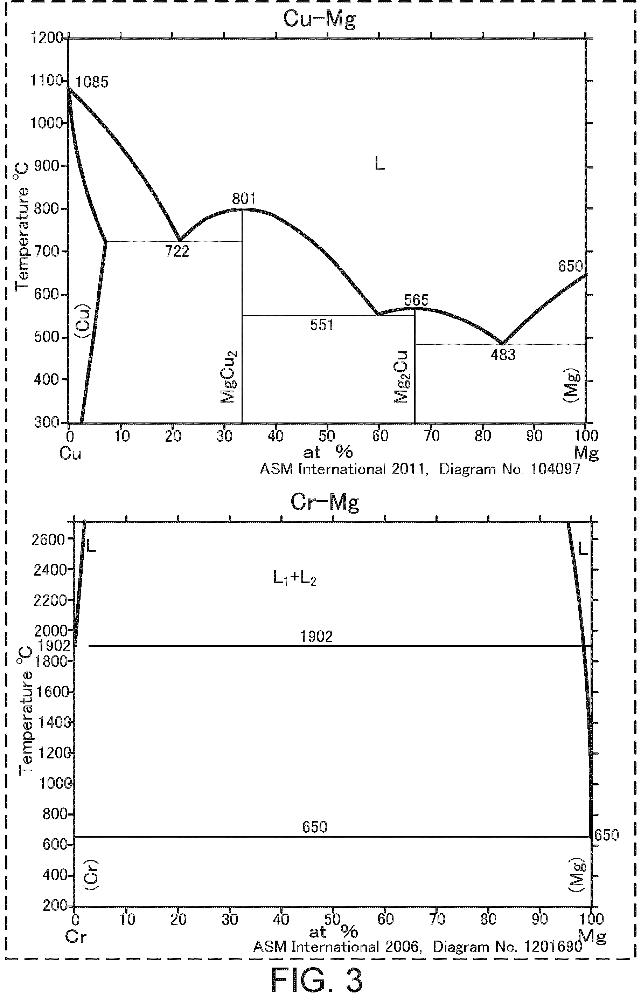

That is, to simultaneously achieve the high electrical conductivity and the high mechanical strength in balance at high level, it is necessary to sufficiently completely precipitate chromium even at a relatively low aging treatment temperature. To promote precipitation of a solute element from a solvent element that is a substrate, it is effective to raise the chemical potential of the solute element. Hence, it can be considered that if an element that raises the chemical potential of chromium in the substrate is added to a copper-chromium alloy, repulsive interaction between the elements is enhanced, the chemical potential of chromium rises, and precipitation of chromium can be promoted. We examined adding an element that raises the chemical potential of chromium as a third element to a copper-chromium alloy. We searched various elements for candidates of the third element with a high repulsive interaction and found magnesium. Since it can be estimated from the phase diagram of Fig. 3 that there is a possibility that magnesium has a high repulsive interaction to both chromium and copper that is the substrate, even a small amount of magnesium can be considered as effectively acting on the chemical potential rise of chromium. In addition, magnesium is one of alloy elements for copper which have the weakest effect of increasing the resistivity of the substrate, and even if magnesium is added as the third element to the copper-chromium alloy, the influence on the electrical conductivity can be expected to be suppressed minimum. Thus, the present inventors arrived at adding magnesium as the third element to the copper-chromium alloy and the present invention was accomplished as a result of intensive studies.

Based on the above-described examination, in this example embodiment, it is possible to provide a copper alloy powder for additive manufacturing capable of simultaneously achieving a high electrical conductivity and a high strength at high level and an additively manufactured product thereof.

More specifically, the copper alloy powder for additive manufacturing according to this example embodiment is a copper alloy powder containing 0.70 wt% or more to 1.5 wt% or less of chromium, 0.05 wt% or more to 0.35 wt% or less of magnesium, and a balance formed from copper and unavoidable impurities.

Also, in the copper alloy powder for additive manufacturing according to this example embodiment, the 50% particle size is 3.0 μm or more to 200 μm or less.

In the copper alloy powder for additive manufacturing according to this example embodiment, the apparent density of the powder measured by the measurement method of JIS Z 2504 is 3.5 g/cm$^3$ or more.

In the copper alloy powder for additive manufacturing according to this example embodiment, the adhesion of the copper alloy powder obtained from a failure envelope obtained by a shearing test is 0.600 kPa or less.

The copper alloy additively manufactured product according to this example embodiment is additively manufactured by an additive manufacturing apparatus using the copper alloy powder for additive manufacturing according to this example embodiment, and contains 0.70 wt% or more to 1.5 wt% or less of chromium, 0.05 wt% or more to 0.35 wt% or less of magnesium, and a balance formed from copper and unavoidable impurities.

The copper alloy additively manufactured product according to this example embodiment has an electrical conductivity of 60%IACS or more.

The copper alloy additively manufactured product according to this example embodiment has a Vickers hardness of 230 Hv or more.

The manufacturing method of the copper alloy additively manufactured product according to this example embodiment further includes an aging treatment step of holding the copper alloy additively manufactured product according to this example embodiment at 400°C or more to 500°C or less. It is more desirable to hold the copper alloy additively manufactured product at 450°C or more to 500°C or less.

By adding magnesium as the third element to the copper-chromium alloy, the copper alloy powder for additive manufacturing according to this example embodiment enables to manufacture the copper alloy additively manufactured product that has an excellent electrical conductivity and mechanical strength located in the region on the upper side of the boundary line represented by equation (2), that is, in the region on the high strength side and the high electrical conductivity side.


(Copper Alloy Powder for Additive Manufacturing of This Example Embodiment)

The manufacturing method of the copper alloy powder for additive manufacturing according to this example embodiment is not particularly limited. A method of rapidly solidifying powder particles from a molten state, such as a gas atomization method, a water atomization method, a centrifugal atomization method, a plasma atomization method, or a plasma rotating electrode method, is preferably used. From the viewpoint of mass production, the gas atomization method is particularly preferable. The manufactured powder can be classified by a known classifying method under predetermined classifying conditions and adjusted to a copper alloy powder for additive manufacturing with an appropriate grain size. As a classifying apparatus for executing classification, an air flow classifier can suitably be used.

In the copper-chromium alloy that is a precipitation strengthening type alloy, chromium that is in a super-saturated solid solution state in copper as the substrate is precipitated by aging treatment, and the strength of the copper alloy improves. To obtain a copper alloy additively manufactured product having a high mechanical strength, the content of chromium is preferably 0.70 wt% or more. If the content is less than 0.70 wt%, the precipitation amount in aging treatment is insufficient, and the effect of improving the strength cannot sufficiently be obtained. The solid-solubility limit of chromium to copper is said to be 0.7 wt% or more to 0.8 wt% or less at a eutectic temperature of about 1,076°C. Although the amount is small, if a manufacturing method of melting a metal and rapidly solidifying it, like an atomization method, is used as the powder manufacturing method, chromium more than the solid-solubility limit can be contained in the copper substrate. Also, if an additive manufacturing method such as a powder bed fusion method is used, fusion by a laser or electron beam and rapid solidification are performed in the step. Hence, an additively manufactured product can be produced while keeping chromium more than the solid-solubility limit contained in the copper substrate. However, if the content of chromium exceeds 1.5 wt%, the electrical conductivity greatly lowers, although an effect of further improving the mechanical strength can be obtained. For this reason, the content of chromium is preferably 1.5 wt% or less.

Magnesium is an important element considered to raise the chemical potential of chromium and enhance the repulsive interaction between elements to promote precipitation of chromium, as described above. If the content of magnesium is less than 0.05 wt%, precipitation of chromium is insufficient, and the high strength and the high electrical conductivity of the present invention cannot simultaneously be satisfied in balance. If the content of magnesium exceeds 0.35 wt%, the ratio of magnesium becomes high. However, even if the content of magnesium is increased, no large effect can be obtained in terms of characteristic. In addition, since expensive magnesium is excessively contained, the cost increases. For these reasons, the content of magnesium is preferably 0.05 wt% or more to 0.35 wt% or less and, more preferably 0.06 wt% or more to 0.25 wt% or less.

Note that the copper alloy powder for additive manufacturing according to this example embodiment sometimes contains unavoidable impurities in addition to chromium and magnesium. The unavoidable impurities are unavoidably mixed in the manufacturing steps of the copper alloy powder for additive manufacturing, and examples are oxygen, phosphorus, iron, aluminum, silicon, and titanium. Since these unavoidable impurities may lower the electrical conductivity, their content is preferably 0.10 wt% or less, more preferably 0.05 wt% or less, and more preferably 0.01 wt% or less.

The powder used for additive manufacturing is required to be suitable for the processes of additive manufacturing, such as the step of supplying the powder from a hopper onto a manufacturing stage, the step of forming a powder layer evenly laid in a predetermined thickens, and the step of melting and solidification. Hence, the following conditions are needed. The conditions are a particle size adjusted within an appropriate range, an apparent density within an appropriate range, and the fluidity of the powder that enables supply from the supply hopper and formation of an appropriate powder layer.

The 50% particle size of the copper alloy powder for additive manufacturing means the integrated 50% particle size (so-called median diameter D50) of the powder in the integrated grain size distribution based on a volume measured by a laser diffraction method, and is preferably included in the range of 3.0 $\mu$m or more to 200 $\mu$m or less. If the 50% particle size is less than 3.0 $\mu$m, the fluidity of the powder does not exist, and no powder bed can be formed even by an additive manufacturing apparatus using a laser powder bed fusion method. Also, the powder intensely spatters and readheres to the additively manufactured product, resulting in surface defects. If the 50% particle size is larger than 100 $\mu$m in a case where additive manufacturing is performed by the laser powder bed fusion method, or if the 50% particle size is larger than 200 $\mu$m in a case where additive manufacturing is performed by an electron beam powder bed fusion method, the surface of the powder bed is rough, and a powder bed suitable for manufacturing cannot be formed. In addition, the surface of the additively manufactured product is roughened to cause an improper appearance, and a molten pool generated in the powder layer at the time of beam irradiation does not reach a solidification layer immediately below, resulting in insufficient melting and solidification and a manufacturing failure. In the laser powder bed fusion method, the 50% particle size is preferably 3.0 $\mu$m or more to 100 $\mu$m or less, more preferably 5.0 $\mu$m or more to 75 $\mu$m or less, and more preferably 10 $\mu$m or more to 45 $\mu$m or less. In the electron beam powder bed fusion method, the 50% particle size is preferably 10 $\mu$m or more to 200 $\mu$m or less, more preferably 25 $\mu$m or more to 150 $\mu$m or less, and more preferably 45 $\mu$m or more to 105 $\mu$m or less.

As for apparent density of the copper alloy powder for additive manufacturing, the apparent density of the powder measured by the measurement method of JIS Z 2504 is preferably 3.5 g/cm$^3$ or more. If the apparent density is less than 3.5 g/cm$^3$, the powder filling property of a powder layer laid by squeegeeing lowers, and an appropriate powder layer cannot be formed. In addition, since the filling property of the powder lowers, holes are formed in the additively manufactured product, and the density of the additively manufactured product lowers.

In the additive manufacturing method, a fluidity is an especially important powder characteristic. In particular, in the powder bed fusion method, the fluidity is the most important powder characteristic directly associated with the quality of an additively manufactured product in powder supply from the supply hopper, powder supply from a recoater, and formation of a powder layer on the manufacturing stage. In the powder bed fusion method, it is necessary to evenly lay the powder in a predetermined thickness on the manufacturing stage. The step of laying the powder is called squeegeeing, and the laying property of the powder is called a squeegeeing property. The powder used in the additive manufacturing method needs to have a sufficient squeegeeing property, and an appropriate fluidity is thus needed for the powder. As an index for measuring the fluidity of a metal powder, a flow rate (FR) defined by JIS Z 2502 "Metallic powders - Determination of flow rate" is used. As for a fine powder which is mainly used in the laser powder bed fusion method and has a 50% particle size of 50 $\mu$m or less, in some cases, the powder does not flow from a measurement container. For this reason, measurement is impossible, and the fluidity cannot be evaluated. Hence, as an index for evaluating the fluidity of a fine powder, it is effective to use an adhesion of powder, which is obtained by a direct shear testing method of powder bed (to be referred to as a shearing test hereinafter) defined in the standard of The Association of Powder Process Industry and Engineering, JAPAN (SAP15-13: 2013) "Direct shear testing method of powder bed". In the shearing test, a shearing stress generated when a pressure is applied vertically to a powder layer formed by consolidation in the vertical direction, and the powder layer is slid sideways in the horizontal direction in this state is measured, thereby obtaining the adhesion from the obtained failure envelope of the powder layer. In the shearing test, the measurement can be done using, for example, Powder Rheometer FT4 available from Freeman Technology. If the adhesion is 0.600 kPa or less, it can be determined that the copper alloy powder for additive manufacturing has a sufficient fluidity for enabling to lay an even powder layer and a satisfactory squeegeeing property. This can obtain a high-density homogeneous additively manufactured product. If the adhesion is larger than 0.600 kPa, the fluidity of the copper alloy powder for additive manufacturing is not sufficient, the squeegeeing property is poor, and an appropriate powder layer cannot be formed. Hence, in the copper alloy powder for additive manufacturing, the adhesion of the copper alloy powder obtained from the failure envelope obtained by the shearing test is preferably 0.600 kPa or less.

(Copper Alloy Additively Manufactured Product of This Example Embodiment)

To produce a copper alloy additively manufactured product, various known metal additive manufacturing techniques can be used. For example, in the powder bed fusion method, steps of laying a metal powder on the manufacturing stage while smoothing it by a blade or a roller to form a powder layer, and irradiating a predetermined position of the formed powder layer with a laser or electron beam to sinter/melt the metal powder are repetitively performed, thereby producing an additively manufactured product. In the manufacturing process of metal additive manufacturing, it is necessary to control a very large number of process parameters to obtain a high-quality additively manufactured product. In the laser powder bed fusion method, many scanning conditions such as a laser output and a laser scanning speed exist. Hence, when setting optimum scanning conditions, main parameters are adjusted using an energy density that is an index comprehensively representing the main parameters. Letting P [W] be the laser output, v [mm/s] be the laser scanning speed, s [mm] be the laser scanning pitch, and t [mm] be the thickness of the powder layer, an energy density E [$J/mm^3$] is decided by $E = P/(v \times s \times t)$. In the laser powder bed fusion method, the energy density is preferably 150 $J/mm^3$ or more to 450 $J/mm^3$ or less. If the energy density is less than 150 $J/mm^3$, an unmolten part or a melting failure occurs in the powder layer, and a defect such as a void occurs in the additively manufactured product. If the energy density exceeds 450 $J/mm^3$, sputtering occurs to make the surface of the powder layer unstable, and a defect such as a void occurs in the additively manufactured product. In the electron beam powder bed fusion method, if negative charges are accumulated in the powder layer to cause charge-up when the powder layer is irradiated with an electron beam, a smoke phenomenon that the powder is thrown up like a fog occurs, resulting in a melting failure. Hence, to prevent the charge-up, a preliminary step of preheating and temporarily sintering the powder layer is necessary. However, if the preheating temperature is too high, sintering progresses to cause necking, and the remaining powder is difficult to remove from the additively manufactured product after manufacturing. Hence, in the copper alloy powder for additive manufacturing, the preheating temperature is preferably set to 400°C or more to 800°C or less. Note that the metal additive manufacturing technique using the powder bed fusion method has been exemplified here. The general additive manufacturing method of producing an additively manufactured product using the copper alloy powder for additive manufacturing according to the present invention is not limited to this, and, for example, an additive manufacturing method using a directed energy deposition method may be employed.

(Aging Treatment)

When aging treatment is performed for the additively manufactured product, chromium that is in a super-saturated solid solution state is precipitated, the strength of the additively manufactured product improves, and the electrical conductivity improves. Hence, the aging treatment step is an essential step to obtain the high-strength and high-electrical conductivity characteristic of the present invention. The aging treatment can be executed by heating the additively manufactured product to a predetermined temperature and holding this for a predetermined time. The aging treatment is preferably performed in a reducing atmosphere, in an inert gas, or in vacuum. The effect of the aging treatment is determined by the combination of the aging treatment temperature and the aging treatment time. It is therefore important to set appropriate conditions in consideration of the balance between efficiency and a target characteristic. The aging treatment temperature is preferably 400°C or more to 500°C or less. More preferably, the aging treatment temperature is 450°C or more to 500°C or less. To particularly improve the mechanical strength, the aging treatment temperature is preferably set to 450°C. To obtain a particularly high electrical conductivity, the aging treatment temperature can be set to 500°C or more. The aging treatment time is preferably set to 0.5 hrs or more to 10 hrs or less if the aging treatment temperature is less than 500°C. The aging treatment time is preferably set to 0.5 hrs or more to 3 hrs or less if the aging treatment temperature is 500°C or more. If the aging treatment time is less than the above-described set time, precipitation of chromium is insufficient. Also, if the aging treatment temperature exceeds the above-described set time, overaging occurs, and precipitated chromium particles become coarse, resulting in lowering of the hardness. If the aging treatment temperature is less than 400°C, it is not practical because a long time is needed to obtain the aging effect. If the aging treatment temperature exceeds 500°C, overaging occurs, and the precipitation phase of chromium becomes coarse, resulting in lowering of the strength. In the additively manufactured product produced using the copper alloy powder for additive manufacturing according to the present invention, even if the aging treatment temperature is 450°C, and the aging treatment time is a few hours, the electrical conductivity and the mechanical strength can sufficiently be improved by the repulsive interaction between chromium and magnesium.

(Evaluation of Copper Alloy Additively Manufactured Product)

The Vickers hardness is measured by a method complying with "JIS Z 2244: Vickers hardness test-Test method". The Vickers hardness can be measured using, for example, a micro Vickers hardness tester HMV-G21-DT available from Shimadzu Corporation.

An additively manufactured product has an electrical conductivity of 60%IACS or more. The electrical conductivity can be measured by, for example, an eddy current conductivity meter. An example of the eddy current conductivity meter is a high-performance eddy current conductivity meter SigmaCheck available from Nihon Matech Corporation. Note that IACS (International Annealed Copper Standard) is the electrical conductivity standard defined by setting the electrical conductivity of an internationally adopted annealed standard copper (volume resistivity: $1.7241 \times 10^{-2}$ μΩm) as 100% IACS. The electrical conductivity can be adjusted by aging treatment and is preferably appropriately adjusted in consideration of the balance to a desired Vickers hardness. The electrical conductivity is preferably 60%IACS or more.

According to this example embodiment, it is possible to provide a copper alloy powder for additive manufacturing capable of obtaining a copper alloy additively manufactured product having a high strength and a high electrical conductivity, and a copper alloy additively manufactured product.

[Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

EXAMPLES

The present invention will be described below in detail based on examples and comparative examples. The following examples and comparative examples are merely detailed examples for facilitating understanding of the technical contents of the present invention, and the technical scope of the present invention is not limited by these detailed examples.

Copper alloy powders for additive manufacturing of various kinds of compositions shown in Table 1 below were manufactured by the gas atomization method. Various kinds of obtained copper alloy powders were classified such that the particle size for the laser powder bed fusion method was 10 μm or more to 45 μm or less, and the particle size for the electron beam powder bed fusion method was 45 μm or more to 105 μm or less.

The content of each component element in the obtained copper alloy powders for additive manufacturing was measured by the ICP atomic emission spectrometry method. Also, the apparent density (AD) (g/cm$^3$) of each obtained copper alloy powder for additive manufacturing was measured in accordance with JIS Z 2504. In addition, the flow rate (FR) (sec/50g) of each obtained copper alloy powder for additive manufacturing was measured in accordance with JIS Z 2502. Also, the 50% particle size (D50) (μm) was measured by the laser diffraction method (Microtrac MT3300: available from MicrotracBEL).

A shearing test was conducted using Powder Rheometer FT4 (available from Freeman Technology), and the adhesion (kPa) of each obtained copper alloy powder for additive manufacturing was measured. The squeegeeing property of each obtained copper alloy powder for additive manufacturing was evaluated by actually laying out the powder to be used in the manufacturing test to form a powder layer on the manufacturing stage of a 3D powder additive manufacturing apparatus (powder bed fusion method/laser method or electron beam method). The measurement results of various kinds of powder characteristics concerning the copper alloy powders for additive manufacturing used in Examples 1 to 4 and Comparative Examples 1 to 10 are shown in Table 1. Here, Comparative Example 8 is a copper fine powder for a conductive material, which was manufactured using a high pressure water atomization method, and Comparative Example 9 is a copper spherical powder, which was manufactured using a plasma rotating electrode method. The copper alloy powder in each of Comparative Examples 8 to 10 had a poor squeegeeing property, and therefore, squeegeeing was impossible, and additive manufacturing could not be executed.

[Table 1]

| | Composition | | Powder characteristic | | | | | Evaluation of manufacturing property | |
| | Element content (wt%) | | D50 | AD | FR | Adhesion | Squeegeeing property | Relative density | Remarks |
| | Cr | Mg | (μm) | (g/cm$^3$) | (sec/50g) | (kPa) | | % | |
| Example 1 | 1.10 | 0.06 | 33.4 | 4.88 | 110 | 0.38 | ○ | 99.7 | excellent |
| Example 2 | 1.12 | 0.21 | 33.3 | 4.86 | 12.6 | 0.37 | ○ | 99.9 | excellent |
| Example 3 | 1.07 | 0.31 | 29.9 | 4.41 | 23.4 | 0.37 | ○ | 99.8 | excellent |
| Example 4 | 1.34 | 0.24 | 30.2 | 4.26 | 21.6 | 0.30 | ○ | 99.7 | excellent |
| Comparative Example 1 | 1.06 | - | 35.2 | 4.86 | 10.8 | 0.41 | ○ | 99.5 | excellent |
| Comparative Example 2 | 0.52 | - | 24.2 | 5.08 | none | 0.56 | ○ | 99.7 | excellent |

(continued)

| | Composition | | Powder characteristic | | | | | Evaluation of manufacturing property | |
|---|---|---|---|---|---|---|---|---|---|
| | Element content (wt%) | | D50 | AD | FR | Adhesion | Squeegeeing property | Relative density | Remarks |
| | Cr | Mg | (μm) | (g/cm$^3$) | (sec/50g) | (kPa) | | % | |
| Comparative Example 3 | 1.10 | 0.76 | 27.5 | 4.46 | 28.3 | 0.36 | ○ | 99.9 | excellent |
| Comparative Example 4 | 1.12 | 002 | 36.0 | 4.94 | 10.5 | 0.18 | ○ | 99.8 | excellent |
| Comparative Example 5 | 200 | 0.30 | 28.3 | 4.60 | 25.7 | 0.19 | ○ | 99.6 | excellent |
| Comparative Example 6 | 0.25 | 0.20 | 31.2 | 4.65 | 26.4 | 0.32 | ○ | 99.3 | excellent |
| Comparative Example 7 | 0.50 | 0.20 | 30.3 | 4.43 | 20.3 | 0.19 | ○ | 99.6 | excellent |
| Comparative Example 8 | - | - | 2.90 | 2.72 | none | 1.17 | × | × | × |
| Comparative Example 9 | - | - | 210.0 | 5.22 | 10.4 | 0.22 | × | × | × |
| Comparative Example 10 | 1.07 | 0.20 | 29.9 | 3.21 | none | 0.63 | × | × | × |

Using the copper alloy powder for additive manufacturing in each of Examples 1 to 4 and Comparative Examples 1 to 7, an additively manufactured product to be used in tests was produced by a 3D powder additive manufacturing apparatus (SLM280HL available from SLM Solutions GmbH) including an Yb fiber laser with a wavelength of 1,064 nm. Additive manufacturing were performed under the conditions that the thickness of an additive layer was 25 μm or more to 50 μm or less, the laser output was 300 W or more to 700 W or less, the scanning speed was 900 mm/sec or more to 1,500 mm/sec or less, and the energy density was 150 J/mm$^3$ or more to 450 J/mm$^3$ or less.

Using the above-described 3D powder additive manufacturing apparatus, a columnar additively manufactured product with a diameter $\phi$ of 14 mm and a height of 10 mm was produced. The density of the produced additively manufactured product was measured by the Archimedes method using helium gas as a substitution medium (Accu-Pyc1330 available from Shimadzu Corporation), and a relative density (%) was calculated by setting a theoretical density (the density of a molten material having the same composition as the additively manufactured product) to 100%. The measurement results are shown in Table 1. Note that the additively manufactured products obtained using the copper alloy powders for additive manufacturing of Comparative Examples 8 to 10 were excluded from the following additively manufactured product characteristic evaluation.

For each of the additively manufactured products of Examples 1 to 4 and Comparative Examples 1 to 7 manufactured by the 3D powder additive manufacturing apparatus, the electrical conductivity (%IACS) was measured using an eddy current conductivity meter (high-performance eddy current conductivity meter SigmaCheck: available from Nihon Matech Corporation). In addition, the Vickers hardness (Hv) of each of the additively manufactured products was measured using a micro Vickers hardness tester (micro Vickers hardness tester HMV-G21-DT: available from Shimadzu Corporation).

For the produced additively manufactured products, aging treatment was performed in an inert atmosphere for 1 hr at a temperature set to 400°C, 450°C, or 500°C. The electrical conductivity of each of the additively manufactured products, which underwent the aging treatment, was measured by the eddy current conductivity meter. In addition, the Vickers hardness was measured by the micro Vickers hardness tester. For the additively manufactured products of Examples 1 to 4 and Comparative Examples 1 to 7 manufactured by the 3D powder additive manufacturing apparatus, the evaluation results of various kinds of characteristics are shown in Table 2.

[Table 2]

| | Composition | | Additive manufacturing propriety | Electrical conductivity [%IACS] | | | Vickers hardness [Hv] | | |
|---|---|---|---|---|---|---|---|---|---|
| | Element content (wt%) | | | Aging treatment 400°C × 1h | Aging treatment 450°C × 1h | Aging treatment 500°C × 1h | Aging treatment 400°C × 1h | Aging treatment 450°C × 1h | Aging treatment 500°C × 1h |
| | Cr | Mg | | | | | | | |
| Example 1 | 1.10 | 0.06 | ○ | 48.5 | 68.6 | | 156.52 | 238.52 | - |
| Example 2 | 1.12 | 0.21 | ○ | 46.6 | 64.1 | 73.7 | 156.52 | 238.95 | 208.74 |
| Example 3 | 1.07 | 0.31 | ○ | 47.1 | 63.7 | 73.0 | 167.56 | 232.98 | 198.37 |
| Example 4 | 1.34 | 0.24 | ○ | 45.9 | 62.2 | 75.2 | 163.80 | 241.80 | 213.10 |
| Comparative Example 1 | 1.06 | - | ○ | 48.1 | 62.3 | 79.3 | 154.78 | 217.06 | 206.07 |
| Comparative Example 2 | 0.52 | - | ○ | 72.4 | 81.1 | 89.5 | 130.50 | 149.80 | 149.80 |
| Comparative Example 3 | 1.10 | 0.76 | ○ | 34.4 | 38.4 | 45.9 | 167.56 | 222.89 | 200, 89 |
| Comparative Example 4 | 1.12 | 0.02 | ○ | 49.9 | 64.1 | 81.9 | 156.52 | 225.89 | 206.07 |
| Comparative Example 5 | 200 | 0.30 | ○ | 38.7 | 51.8 | 59.2 | 217.10 | 24000 | 230.00 |
| Comparative Example 6 | 0.25 | 0.20 | ○ | 75.1 | 84.3 | 87.7 | 109.50 | 125.40 | 140.40 |
| Comparative Example 7 | 0.50 | 0.20 | ○ | 57.4 | 71.3 | 80.2 | 133.20 | 186.50 | 169.50 |

Then, Fig. 4 similar to Fig. 1 was generated from the evaluation results of various kinds of characteristics in Table 2. Fig. 4 is a graph showing the relationship and the boundary line between the Vickers hardness and the electrical conductivity of each of copper alloy additively manufactured products obtained in examples and comparative examples. Note that in Fig. 4, Example 1-1 and Comparative Example 1-1 indicate the measurement results, plotted on the graph, obtained by measuring the copper alloy additively manufactured products which underwent the aging treatment at 400°C while using the copper alloy powders for additive manufacturing of Example 1 and Comparative Example 1, respectively. Example 1-2 and Comparative Example 1-2 indicate the measurement results, plotted on the graph, obtained by measuring the copper alloy additively manufactured products which underwent the aging treatment at 450°C while using the copper alloy powders for additive manufacturing of Example 1 and Comparative Example 1, respectively. Example 1-3 and Comparative Example 1-3 indicate the measurement results, plotted on the graph, obtained by measuring the copper alloy additively manufactured products which underwent the aging treatment at 500°C while using the copper alloy powders for additive manufacturing of Example 1 and Comparative Example 1, respectively. The copper alloy powders for additive manufacturing are evaluated below based on whether a copper alloy additively manufactured product having a high strength (Vickers hardness of 230 Hv or more) and a high electrical conductivity (electroconductivity of 60%IACS or more) can be obtained. Note that, depending on the application of the copper alloy additively manufactured product, the copper alloy additively manufactured product not having a high strength and a high electrical conductivity is also usable.

(Evaluation of Examples and Comparative Examples)

In Comparative Examples 1 and 2, since a copper-chromium alloy containing no magnesium was used, the high strength and the high electrical conductivity of the present invention could not simultaneously be satisfied in balance. In Comparative Example 3, since the content of magnesium was larger than the content of the present invention, the high strength and the high electrical conductivity of the present invention could not simultaneously be satisfied in balance. In Comparative Example 4, since the content of magnesium was smaller than the content of the present invention, the high strength and the high electrical conductivity of the present invention could not simultaneously be satisfied in balance.

In Comparative Example 5, magnesium within the range of the present invention was contained but 2.00 wt% of chromium was contained, which is above the range. Therefore, a high Vickers hardness was exhibited, but the electrical conductivity was low, and the high strength and the high electrical conductivity of the present invention could not simultaneously be satisfied in balance. In Comparative Examples 6 and 7, magnesium within the range of the present invention was contained. However, since a sufficient amount of chromium was not contained, the electrical conductivity was sufficient but the strength was insufficient, and the high strength and the high electrical conductivity of the present invention could not simultaneously be satisfied in balance.

On the other hand, in Examples 1 to 4, the high strength and the high electrical conductivity were simultaneously implemented in balance.

From above, according to the examples, it was confirmed that a copper alloy powder for additive manufacturing capable of implementing an excellent electrical conductivity and strength and a copper alloy additively manufactured product having an excellent electrical conductivity and strength can be provided.

**Claims**

1. A copper alloy powder for additive manufacturing used to manufacture an additively manufactured product by an additive manufacturing method, wherein
   the copper alloy powder contains not less than 0.70 wt% to not more than 1.5 wt% of chromium and not less than 0.05 wt% to not more than 0.35 wt% of magnesium, and a balance is formed from copper and an unavoidable impurity.

2. The copper alloy powder for additive manufacturing according to claim 1, wherein the copper alloy powder for additive manufacturing contains not less than 0.70 wt% to not more than 1.5 wt% of chromium and not less than 0.06 wt% to not more than 0.25 wt% of magnesium, and a balance is formed from copper and an unavoidable impurity.

3. The copper alloy powder for additive manufacturing according to claim 1 or 2, wherein a 50% particle size is not less than 3.0 μm to not more than 200 μm.

4. The copper alloy powder for additive manufacturing according to any one of claims 1 to 3, wherein an apparent density of the powder measured by a measurement method of JIS Z 2504 is not less than 3.5 g/cm$^3$.

5. The copper alloy powder for additive manufacturing according to any one of claims 1 to 4, wherein an adhesion of the copper alloy powder obtained from a failure envelope obtained by a shearing test is not more than 0.600 kPa.

**6.** A copper alloy additively manufactured product additively manufactured by an additive manufacturing apparatus using a copper alloy powder for additive manufacturing according to any one of claims 1 to 5, wherein
the copper alloy additively manufactured product contains not less than 0.70 wt% to not more than 1.5 wt% of chromium and not less than 0.05 wt% to not more than 0.35 wt% of magnesium, and a balance is formed from copper and an unavoidable impurity.

**7.** The copper alloy additively manufactured product according to claim 6, wherein the copper alloy additively manufactured product has an electrical conductivity of not less than 60%IACS.

**8.** The copper alloy additively manufactured product according to claim 7, wherein the copper alloy additively manufactured product has a Vickers hardness of not less than 230 Hv.

**9.** A manufacturing method of a copper alloy additively manufactured product, comprising:

additively manufacturing a copper alloy additively manufactured product by an additive manufacturing apparatus using a copper alloy powder for additive manufacturing according to any one of claims 1 to 5; and
holding the copper alloy additively manufactured product at not less than 400°C to not more than 500°C.

**10.** A manufacturing method of a copper alloy powder for additive manufacturing used to manufacture an additively manufactured product by an additive manufacturing method, comprising:

generating, by one of a gas atomization method and a plasma rotating electrode method, a copper alloy powder containing not less than 0.70 wt% to not more than 1.5 wt% of chromium, not less than 0.05 wt% to not more than 0.35 wt% of magnesium, and a balance formed from copper and an unavoidable impurity; and
classifying the generated copper alloy powder into a particle size of not less than 10 $\mu$m to not more than 45 $\mu$m and a particle size of not less than 45 $\mu$m to not more than 105 $\mu$m.

**11.** An evaluation method of a copper alloy powder for additive manufacturing, comprising:

additively manufacturing a copper alloy additively manufactured product using the copper alloy powder for additive manufacturing of an evaluation target;
measuring an electrical conductivity X (%IACS) and a Vickers hardness Y (Hv) of the copper alloy additively manufactured product; and
evaluating the copper alloy powder for additive manufacturing depending on whether, if the electrical conductivity X (%IACS) and the Vickers hardness Y (Hv) are plotted on a two-dimensional graph formed by an X-axis and a Y-axis, a point (X, Y) is located on a high strength side and a high electrical conductivity side of a boundary line represented by ($Y = -1.1X + 300$).

RELATIONSHIP BETWEEN ELECTRICAL CONDUCTIVITY
AND VICKERS HARDNESS IN PATENT LITERATURE 1

FIG. 1

EP 4 480 603 A1

START

S201 PERFORM FORMATION PROCESSING
OF POWDER LAYER

S202 IS FORMATION
OF POWDER LAYER
POSSIBLE? — NO

YES

S203 MANUFACTURE ADDITIVELY
MANUFACTURED PRODUCT USING
COPPER ALLOY POWDER FOR
ADDITIVE MANUFACTURING OF
EVALUATION TARGET

S204 MEASURE ELECTRICAL
CONDUCTIVITY X (%IACS) AND
VICKERS HARDNESS Y (Hv) OF
MANUFACTURED ADDITIVELY
MANUFACTURED PRODUCT

S205 (X, Y) LOCATED
IN REGION (Y ≧ -1.1X + 300)
ON UPPER SIDE OF
BOUNDARY? — NO

YES

S207 EVALUATE THAT POWDER IS
SUFFICIENT AS COPPER ALLOY
POWDER FOR ADDITIVE
MANUFACTURING

S209 EVALUATE THAT POWDER IS
INSUFFICIENT AS COPPER ALLOY
POWDER FOR ADDITIVE
MANUFACTURING

END

FIG. 2

## Cu-Mg

ASM International 2011, Diagram No. 104097

## Cr-Mg

ASM International 2006, Diagram No. 1201690

# FIG. 3

FIG. 4

## INTERNATIONAL SEARCH REPORT

| International application No. |
|---|
| **PCT/JP2022/014272** |

**A. CLASSIFICATION OF SUBJECT MATTER**

*B22F 1/00*(2022.01)i; *B22F 1/052*(2022.01)i; *B22F 10/20*(2021.01)i; *B33Y 70/00*(2020.01)i
FI: B22F1/00 L; B22F1/052; B22F10/20; B33Y70/00

According to International Patent Classification (IPC) or to both national classification and IPC

**B. FIELDS SEARCHED**

Minimum documentation searched (classification system followed by classification symbols)
B22F1/00; B22F1/052; B22F10/20; B33Y70/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-197389 A (DAIHEN CORP) 13 December 2018 (2018-12-13)<br>claims, paragraphs [0025], [0058]-[0086], fig. 9-11 | 1-11 |
| Y | SUN, Yuqing et al. Effects of Mg addition on the microstructure and softening resistance of Cu-Cr alloys. Materials Science and Engineering: A. 03 March 2020, vol. 776, Article 139009, https://doi.org/10.1016/j.msea.2020.139009<br>in particular, Results, Conclusion | 1-11 |
| Y | WO 2018/235213 A1 (FUKUDA METAL FOIL & POWDER CO., LTD.) 27 December 2018 (2018-12-27)<br>claims, paragraphs [0036]-[0038] | 3-9 |
| Y | WO 2019/017467 A1 (MITSUI MINING & SMELTING CO., LTD.) 24 January 2019 (2019-01-24)<br>paragraph [0034] | 5-9 |
| Y | WO 2020/185641 A1 (HOEGANAES CORPORATION) 17 September 2020 (2020-09-17)<br>paragraph [0032] | 10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/014272**

### C.    DOCUMENTS CONSIDERED TO BE RELEVANT

| Category* | Citation of document, with indication, where appropriate, of the relevant passages | Relevant to claim No. |
|---|---|---|
| A | JP 2018-70914 A (DAIHEN CORP) 10 May 2018 (2018-05-10) claims, paragraphs [0021], [0052]-[0079], fig. 9-11 | 1-11 |
| A | WO 2019/239655 A1 (FURUKAWA ELECTRIC CO LTD) 19 December 2019 (2019-12-19) entire text, all drawings | 1-11 |

Form PCT/ISA/210 (second sheet) (January 2015)

**INTERNATIONAL SEARCH REPORT**
Information on patent family members

International application No.

**PCT/JP2022/014272**

| Patent document cited in search report | | | Publication date (day/month/year) | Patent family member(s) | | | Publication date (day/month/year) |
|---|---|---|---|---|---|---|---|
| JP | 2018-197389 | A | 13 December 2018 | US | 2018/0111199 | A1 | |
| | | | | claims, paragraphs [0048], [0105]-[0136], fig. 9-11 | | | |
| | | | | US | 2021/0187614 | A1 | |
| | | | | WO | 2018/079304 | A1 | |
| | | | | EP | 3315229 | A1 | |
| | | | | EP | 3482856 | A1 | |
| | | | | EP | 3854503 | A1 | |
| | | | | CN | 107971489 | A | |
| | | | | TW | 201823481 | A | |
| | | | | TW | 201907016 | A | |
| | | | | TW | 201907017 | A | |
| | | | | TW | 201907018 | A | |
| | | | | SG | 11201903358T | A | |
| | | | | KR | 10-2019-0075987 | A | |
| | | | | DK | 3315229 | T | |
| | | | | PL | 3315229 | T | |
| | | | | ES | 2781565 | T | |
| WO | 2018/235213 | A1 | 27 December 2018 | US | 2020/0180024 | A1 | |
| | | | | claims, paragraphs [0059]-[0062] | | | |
| | | | | EP | 3643428 | A1 | |
| | | | | CN | 110740827 | A | |
| WO | 2019/017467 | A1 | 24 January 2019 | (Family: none) | | | |
| WO | 2020/185641 | A1 | 17 September 2020 | KR | 10-2021-0136966 | A | |
| JP | 2018-70914 | A | 10 May 2018 | WO | 2018/079002 | A1 | |
| | | | | TW | 201823480 | A | |
| WO | 2019/239655 | A1 | 19 December 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6389557 B